# EUROPÄISCHE PATENTANMELDUNG

(11) **EP 1 839 928 A2**
(43) Veröffentlichungstag der Anmeldung: **03.10.2007**
(21) Anmeldenummer: 07002684.4
(22) Anmeldetag: 08.02.2007
(51) Int. Cl.: B60L 1/16, B60Q 1/26, B60Q 11/00, H05B 33/08

(54) **Fahrzeugleuchtenanordnung**

(30) Priorität: 29.03.2006 DE 102006014805; 22.04.2006 DE 102006018813
(71) Anmelder: KOMPLED GmbH & Co. KG, 89081 Ulm (DE)
(72) Erfinder: Koch, Josef, 89081 Ulm (DE)
(74) Vertreter: Weber, Gerhard

(57) **Zusammenfassung**

Für eine Fahrzeugleuchtenanordnung, insbesondere für Nutzfahrzeuganhänger, mit Leuchtdioden als lichtimittierenden Elementen werden Maßnahmen zur Ausfallsicherheit bzw. Ausfallerkennung beschrieben.
Die Leuchte enthält eine Mehrzahl von LEDs, welche in mehreren Strompfaden (S1,S2,S3) angeordnet sind. Eine Steuereinrichtung gibt einen Betriebsstrom vor, der eine kumulierte anfängliche Lichtstärke erzeugt. Bei Ausfall eines der Strompfade wird der defekte Pfad abgeschaltet und die verbleibenden Pfade mit einem erhöhten Betriebsstrom derart beaufschlagt, dass die Gesamtintensität der Leuchte oberhalb eines geforderten Mindestwertes bleibt und der erhöhte Betriebsstrom unterhalb des maximal zulässigen Dauer-Durchlassstroms der Dioden liegt.
Ein niederohmiger Überbrückungspfad überbrückt einzelne ausgefallene LEDs. Eine Überstromsicherung schaltet bei Ausfall weiterer LEDs, wodurch die verbleibenden Pfade oberhalb des zulässigen Strom-Grenzwertes betrieben werden müssten, die Leuchte ganz ab.

## Beschreibung

Die Erfindung betrifft eine Fahrzeugleuchtenanordnung, insbesondere für Nutzfahrzeuganhänger.

Bei Nutzfahrzeugen, insbesondere Nutzfahrzeuganhängern sind besondere Sicherheitsvorschriften von Gesetzgeberseite oder Sicherheitsvorkehrungen von Seiten der Zugfahrzeughersteller für Leuchtenfunktionen des Anhängers gegeben. So ist z. B. eine fortlaufende Überprüfung der Funktion der Blinklichter vorgeschrieben. Darüber hinaus gehende Prüfroutinen von Zugfahrzeugherstellern können insbesondere die Überprüfung und Anzeige der Funktion der Bremsleuchten umfassen. Es ist auch bekannt, dass eine zugfahrzeugseitige Prüfeinrichtung aus einer Prüfroutine einer Anhängerleuchtenanordnung das Vorhandensein eines Anhängers detektiert.

Typischerweise wird als Prüfkriterium ein Vergleich eines beim Einschalten der Leuchtenfunktion durch den Leuchtenstromkreis fließenden Stroms mit einem Referenzwert oder ein entsprechender Vergleich für eine mit einem solchen Strom korrelierte Größe benutzt.

Bei Fahrzeugleuchten zeigt sich insbesondere in den Heckleuchten eine Tendenz, die herkömmlichen Glühlampen durch Leuchtdioden-Arrays zu ersetzen.

Aus der DE 101 37 338 A1 ist eine Beleuchtungseinrichtung für ein Kraftfahrzeug bekannt, bei welcher ein Gleichspannungswandler aus der Schwankungen unterworfenen Bordnetzspannung eine konstante Betriebsspannung für die jeweils getrennt schaltbaren Leuchten verschiedener Leuchtenfunktionen, wie Bremslicht, Schlusslicht, Nebelschlussleuchte etc. erzeugt. Mittels in die einzelnen Stromkreise eingefügter Stromsensoren kann für jeden Stromkreis ein IstWert des Stroms ermittelt und mit einem Sollwert verglichen und bei Abweichungen ein Fehlersignal erzeugt werden. Die Leuchtdioden in den einzelnen Leuchten können in parallelen Strompfaden mit jeweils mehreren in Serie geschalteten Leuchtendioden und einem Serienwiderstand, welcher in jedem Strompfad einen konstanten Strom einstellt und eine Überschreitung des zulässigen LED-Betriebsstroms verhindert, angeordnet sein. Eine Beleuchtungsschaltung für Fahrzeuglampen mit einem getakteten Spannungsregler zur Versorgung mehrerer Leuchten mit in Serie geschalteten Leuchtdioden und Serienwiderständen ist auch aus der DE 103 46 528 A1 bekannt, wobei hier die Serienwiderstände zugleich als Stromsensoren eingesetzt und mit einem Störungsdetektor verbunden sind.

Bei einer aus der DE 199 29 430 A1 bekannten Schlussleuchte für Schienenfahrzeuge ist eine große Anzahl von Leuchtdiodengruppen mit jeweils einer Serienschaltung von mehreren Dioden und einem Widerstand vorgesehen, welche aus einem Schaltnetzteil mit geregelter Ausgangsspannung gespeist sind. Aus den Serienschaltungen wird jeweils ein Teilstrom abgezweigt und alle Teilströme werden summiert, wobei Serienschaltungen mit einer defekten Diode keinen Teilstrom liefern und so aus dem Summenstrom eine Aussage über den Anteil defekter Strompfade abgeleitet werden kann. Die US 5 765 940 zeigt eine Heckleuchtenanordnung mit Leuchtdioden in Zeilen und Spalten und einen Spannungsregler, wobei dasselbe Array als Rücklicht mit geringerem und als Bremslicht mit höherem Strom beaufschlagt wird.

Bei einer aus der DE 197 34 750 C2 bekannten Heckleuchte von Kraftfahrzeugen, umfasst eine Steuerelektronik eine Mehrzahl von Konstantstromreglern, jeweils eine LED-Ausfallerkennung für Einzelleuchten und eine Gesamt-Ausfallerkennung. In den einzelnen Leuchten ist ein Mittenabgriff von zwei in Serie geschalteten Arrays vorgesehen. Die DE 197 32 828 C2 zeigt z. B. für Rückleuchten eines Kraftfahrzeugs eine Schaltungsanordnung zur Ansteuerung eines Leuchtdioden-Arrays, welches eine Vielzahl einzelner parallel geschalteter Leuchtdioden aufweist und aus einem Schaltwandler mit Pulsweitenmodulation mit einem Konstantstrom gespeist ist. Ein Ausfall einzelner Leuchtdioden beeinflusst die übrigen Leuchtdioden nicht und führt nur zu einer geringen Erhöhung von deren Einzelströmen. Mehrere derartige Arrays können in Serie geschaltet sein. In der EP 1 006 506 A1 ist eine Fahrzeugleuchte beschrieben, bei welcher ein Leuchtdiodenarray mehrere parallele Strompfade mit jeweils mehreren in Serie geschalteten Dioden und einer eigenen steuerbaren Konstantstromquelle in jedem Strompfad enthält. Eine Steuereinrichtung umfasst neben den steuerbaren Konstantstromquellen einen steuerbaren Spannungswandler und ist an verschiedene Arrays anpassbar.

Die Fehlerüberwachung bei den bekannten Anordnungen ist relativ aufwendig und auf spezielle Fehlermeldesysteme zugeschnitten, wogegen ein Nutzfahrzeuganhänger typischerweise abwechselnd an unterschiedlichen Nutzfahrzeugen betrieben ist, welche in der Regel keine Schnittstelle zu anhängerseitigen Diagnosesystemen der Beleuchtungsanordnung aufweisen.

Für den ordnungsgemäßen Betrieb entsprechend Vorschriften für die Zulassung zum Straßenverkehr, welche auch zulässige Bereiche für Lichtstärken von Beleuchtungseinrichtungen umfassen, ist es bereits bei der Typenprüfung von Leuchten von Bedeutung, sicher zu stellen, dass eine funktionierende Leuchte auch die geforderte Lichtstärke erbringt. Solche Zulassungsvorschriften sind insbesondere die "Vehicle Regulations" der United Nations Economic Commission for Europe.

Der vorliegenden Erfindung liegt daher die Aufgabe zugrunde, eine vorteilhafte Fahrzeugleuchtenanordnung, insbesondere für Nutzfahrzeuganhänger anzugeben, welche eine hohe Lebensdauer besitzt und mit bestehenden Vorschriften und Prüfeinrichtungen kompatibel ist.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Die Erfindung nutzt zum einen die Vorteile der Leuchten mit Leuchtdioden als Lichtquellen aus, welche typischerweise eine sehr viel höhere mittlere Lebensdauer besitzen als Glühlampen und zum anderen die Vorteile der Mehrzahl von Lichtquellen, indem bei Ausfall einer einzelnen Leuchtdiode oder eines einzelnen Strompfades, welcher mehrere Leuchtdioden enthalten kann, die Leuchtdioden in anderen, nicht defekten Strompfaden weiter mit Betriebsströmen beaufschlagbar bleiben und über die die Leuchtdioden in den Strompfaden ansteuernde Steuereinrichtung mit Betriebsströmen beaufschlagt werden.

Insbesondere vorteilhaft ist es, die Strompfade und die Leuchtdioden in den Strompfaden so anzuordnen und die Steuereinrichtung so zu gestalten, dass die Leuchte nicht nur bei voller Funktion aller Strompfade und Leuchtdioden sondern auch nach Ausfall eines einzelnen Strompfades eine die Mindestanforderungen einer Zulassungsvorschrift erfüllende Lichtstärke aufweist. In vorteilhafter Ausführung ist die nach einer solchen Zulassungsvorschrift geforderte Lichtstärke auch noch bei Ausfall von mehreren Strompfaden, vorzugsweise wenigstens bis zum Ausfall der Hälfte aller Strompfade gegeben. Solche Vorschriften sind insbesondere die "Vehicle regulations" der United Nations Economic Commission for Europe (UNECE).

Die Verschaltung von Leuchtdioden in mehreren Strompfaden und deren Beaufschlagung mit Betriebsströmen aus einer Steuereinrichtung sind dem Fachmann an sich geläufig. Maßnahmen zum Betrieb einer Leuchte mit einer Mehrzahl von Leuchtdioden auch nach Ausfall eines von mehreren Strompfaden sind dem Fachmann an sich bekannt. Als Strompfad sei dabei eine elektrisch leitende Verbindung zwischen zwei Anschlusspunkten über eine oder vorzugsweise mehrere Leuchtdioden verstanden. Ein Ausfall eines Strompfads sei als eine Unterbrechung der elektrisch leitenden Verbindung zwischen den Anschlusspunkten des Strompfads angenommen. Dabei sei als typischer Defekt einer Leuchtdiode eine Unterbrechung der leitenden Verbindung durch die Diode in Durchlassrichtung angenommen. Eine gegenüber dem normalen Funktionszustand sehr hochohmige Verbindung sei einer Unterbrechung gleichgestellt und als Ausfall eines Strompfads anzusehen.

Die Maßnahme, bei Ausfall eines von mehreren parallelen Strompfaden mit Leuchtdioden den Strom durch wenigstens einen der noch intakten Strompfade zu erhöhen, ermöglicht die teilweise oder vollständige Kompensation des Ausfalls des Leuchtstäbebeitrags des defekten Strompfads durch Erhöhung der Lichtstärke der Leuchtdioden in einem oder mehreren der intakten parallelen Strompfade, wodurch insbesondere gewährleistet werden kann, dass auch nach Ausfall eines von mehreren Strompfaden Grenzwerte für Mindestlichtstärken einer Leuchtenfunktion nach einer Zulassungsvorschrift oder dergleichen eingehalten werden.

Während die Einhaltung vorgegebener Mindestlichtstärken bei nur noch teilweise funktionsfähiger Leuchte mit einem oder mehreren ausgefallenen Strompfaden auf einfache Weise durch großzügige Reserven in den Betriebsströmen oder der Anzahl der Strompfade und Leuchtdioden realisierbar ist, sind nachfolgend vorteilhafte Beispiele, welche ohne solche großzügigen Reserven und damit wirtschaftlich vorteilhafter realisierbar sind, eingehend beschrieben.

Vorteilhafterweise sind die Leuchtdioden gruppenweise in mehreren parallelen Strompfaden mit jeweils mehreren in Serie geschalteten Leuchtdioden angeordnet. Diodenarrays solcher Art sind an sich bekannt.

Vorteilhafterweise kann vorgesehen sein, dass eine Untergrenze für die Anzahl funktionsfähiger Strompfade vorgesehen ist, bis zu welcher ein dauerhafter Leuchtenbetrieb mit ausreichender Lichtstärke gewährleistet ist, und bei einer Unterschreitung einer solchen Untergrenze eine selbsttätige Abschaltung des oder der verbliebenen Strompfade erfolgt. Allgemein sei für die Schaltungsmaßnahmen hierfür eine Sicherheitsvorrichtung vorgesehen. Insbesondere kann vorgesehen sein, dass die Ströme durch die Strompfade in Abhängigkeit von der Anzahl noch intakter Strompfade relativ zu der Anzahl aller paralleler Strompfade so vorgegeben sind, dass in der Situation, in welcher der oder die verbleibenden Strompfade keine ausreichende Lichtstärke mehr erbringen können, der Strom durch diese verbleibenden Strompfade so hoch ist, dass eine kurzfristige Abschaltung auch dieser Strompfade durch gezielt hohen Strom erfolgt.

Beispielsweise kann bei anfänglich vier parallelen Strompfaden die Strombelastung der Leuchtdioden derart gewählt sein, das auch nach Ausfall zweier Strompfade die Leuchtdioden der verbliebenen beiden Strompfade mit erhöhtem, z. B. gegenüber dem anfänglichen Normalstrom verdoppeltem Strom annähernd dieselbe Lichtstärke bewirken wie alle Leuchtdioden bei Normalstrom, ohne die absoluten Belastungsgrenzwerte der Leuchtdioden zu überschreiten, dass aber bei Ausfall eines weiteren Strompfads dessen Stromanteil dem einzigen verbleibenden Strompfad zugeschlagen wird, welcher wegen des dann vierfachen Werts des Normalstroms schnell ausfällt. Die Abschaltschwelle kann auch bei einer anderen Anzahl verbleibender intakter Strompfade gesetzt sein.

Hierdurch kann insbesondere eine einfache Ausfallerkennung anhand des Vorliegens eines Stroms durch die betroffene Leuchte vorgenommen werden. Ein fortgesetzter Betrieb bei eventuell nicht mehr zulässiger weil zu geringer Lichtstärke wird dadurch vermieden. Ein Abschaltschwellwert für den Betriebsstrom liegt vorteilhafterweise um wenigstens 100 % über dem anfänglichen Betriebsstrom.

Die Sicherheitsvorrichtung zur Abschaltung des letzten Strompfads kann insbesondere durch eine der Leuchtdioden selbst gegeben sein, welche durch den abrupten Stromausstieg schnell zerstört wird. In besonders vorteilhafter Ausführung kann eine Überstromsicherung als eigenständiges Bauelement, insbesondere eine Schmelzsicherung, welche mit genauer definierter Ansprechschwelle als die Druchlassstrom-Grenzwerte der Leuchtdioden verfügbar ist, in den Strompfad eingefügt sein.

In anderer vorteilhafter Ausführungsform kann die Sicherheitsvorrichtung eine Überwachungseinrichtung enthalten, welche fortlaufend im Betrieb die Anzahl der funktionierenden Strompfade überwacht und mit einem vorgebbaren Schwellwert vergleicht und bei Schwellwertunterschreitung die verbliebenen Strompfade abschaltet, insbesondere durch Betätigung einer auf die jeweiligen Strompfade, auf eine gemeinsame Zuleitung oder die Steuereinrichtung wirkenden Schalteinrichtung.

Die Abschaltung eines oder mehrerer verbliebener Strompfade nach Unterschreitung einer vorgegebenen Mindestanzahl von Strompfaden ist insbesondere von Vorteil dahingehend, dass die anfängliche Reserve für eine Erhöhung des Betriebsstroms gering gehalten werden kann. Dadurch können gegenüber höherer Betriebsstromreserve weniger und/oder kostengünstigere Dioden eingesetzt sein.

Eine geringe Anzahl von Strompfaden, vorzugsweise maximal acht Strompfade, und eine gleichfalls geringe Mindestanzahl von funktionierenden Strompfaden, vorzugsweise zwischen zwei und vier Strompfaden, ist hierbei besonders vorteilhaft hinsichtlich des Aufwands und der Einhaltung des gesetzten Schwellwerts.

In anderer vorteilhafter Ausführung kann im Gegensatz zu einer Mindestanzahl funktionierender Strompfade vorgesehen sein, dass auch der letzte verbleibende Strompfad noch innerhalb der Strombelastungsgrenzwerte allein eine ausreichende, insbesondere eine die Zulassungsvorschriften erfüllende Lichtstärke erzeugt, wodurch der Fahrer bei regelmäßiger Leuchtenkontrolle einerseits den Ausfall der meisten Leuchtdioden einer Leuchte aus der Nähe leicht erkennt, andererseits aber die Fahrt ohne sofortigen Austausch der Leuchte noch fortsetzen kann. Dies kann insbesondere von Vorteil sein für die jeweils nur kurzzeitig eingeschalteten Blinkleuchten, für welche besonders strenge Vorschriften gelten. Diese können durch den intermittierenden Betrieb mit ca. 300 ms Einschaltzeit und ca. 300 ms Pause mit höherem Überstrom betrieben werden als über eine größere zusammenhängende Einschaltzeit oder kontinuierlich bestromte Leuchtdioden.

In wieder anderer Ausführung oder in Abwandlung vorstehender Ausführungen kann auch vorgesehen sein, dass bei Ausfall eines oder mehrerer paralleler Strompfade die von den verbleibenden Strompfaden erzeugte Lichtstärke als Restlichtstärke geringer ist als die anfängliche kumulierte Lichtstärke mit allen intakten Strompfaden und dass daher die Stromerhöhung in den verbleibenden intakten Strompfaden geringer ausfallen kann als bei vollständiger Lichtstärkenkompensation. Dies kann insbesondere vorteilhaft sein, wenn die anfängliche kumulierte Lichtstärke deutlich über einer durch eine Vorschrift gesetzten unteren Schwelle liegt und die Restlichtstärke noch über der Schwelle oder in einem Toleranzbereich unter der Schwelle liegt. Es kann auch eine Kombination der Art vorteilhaft sein, dass die Stromerhöhung in mehreren intakten Strompfaden so beschränkt wird, dass in diese intakten Pfaden die Belastungsgrenzwerte nicht oder bei Blinkleuchten im Mittel nicht überschritten werden, dass aber bei Ausfall des vorletzten Strompfads der einzig verbleibende Strompfad mit so hohem Strom, vorteilhafterweise wenigstens 30 %, insbesondere wenigstens 50 % über dem absoluten Grenzwert der Leuchtdioden beaufschlagt wird, dass auch dieser Strompfad schnell ausfällt.

Anstelle von oder zusätzlich zu der Anordnung der Leuchtdioden in mehreren parallelen Strompfaden kann auch eine serielle Anordnung der Strompfade vorgesehen sein, wobei wiederum vorzugsweise einige oder alle Strompfade mehrere Leuchtdioden enthalten. Die seriell zueinander angeordneten Strompfade sind dabei typischerweise alle von demselben Betriebsstrom durchflossen. Um einen Ausfall der gesamten Leuchte bei Ausfall eines einzelnen Strompfads zu vermeiden, kann vorteilhafterweise vorgesehen sein, jedem oder zumindest mehreren der Strompfade einen Überbrückungspfad zuzuordnen, welcher während der fehlerfreien Funktion des jeweiligen Strompfads inaktiv, insbesondere hochohmig gegenüber dem Strompfad ist, aber bei Ausfall des Strompfades, z. B. bei Zerstörung einer der Leuchtdioden automatisch zugeschaltet wird und den Strom durch die verbliebenen intakten Strompfade an dem ausgefallenen Strompfad vorbei führt. Der Überbrückungspfad kann eine elektronische Schaltung enthalten. In besonders einfacher Ausführung kann der Überbrückungspfad einen NTC-Widerstand enthalten, welcher während der fehlerfreien Funktion des Strompfads hochohmig gegenüber dem Strompfad ist, bei Ausfall des Strompfads aber in einen niederohmigen Zustand übergeht.

In vorteilhafter Ausführung kann vorgesehen sein, dass der aktivierte Überbrückungspfad einen niedrigeren elektrischen Widerstand besitzt als der Strompfad vor dessen Ausfall. In Verbindung mit einer Konstantspannungs-Beaufschlagung der seriellen Anordnung der mehreren Stromkreise kann dadurch auf einfache Weise eine Erhöhung des Stroms durch die verbliebenen Strompfade und eine Steigerung deren Lichtstärke erreicht werden. Ferner kann dabei eine besonders einfache Stromüberwachung und Abschaltung erreicht werden, indem eine Überstromsicherung in eine Zuleitung zu der seriellen Anordnung der Strompfade oder in den Verlauf der seriellen Anordnung eingefügt wird.

Es können auch für verschiedene Leuchtenfunktionen einer Heckleuchtenanordnung unterschiedliche der vorstehenden Ausführungen vorgesehen sein.

Für Anhänger-Beleuchtungsanlagen mit Leuchtdioden kann vorteilhafterweise vorgesehen sein, dass ein oder mehrere Leuchtenstromkreise durch eine anhängerseitige Einrichtung, nachfolgend auch als Zusatzeinrichtung bezeichnet, zusätzlich zu dem Strom durch die mit Leuchtdioden bestückte Leuchte oder Leuchten für ein vorgegebenes begrenztes Zeitintervall mit einem Zusatzstrom beaufschlagt werden kann, insbesondere durch Zuschaltung eines Lastwiderstands oder einer Stromquelle parallel zu der Leuchte. Dies reduziert zwar den Vorteil der gegenüber Glühlampen geringeren Leistungsaufnahme der Leuchtdioden, bietet aber eine besonders einfache und vorteilhafte Möglichkeit, mit Leuchtdioden bestückte Leuchten in Anhängerbeleuchtungsanlagen mit gängigen Prüfroutinen in Zugfahrzeugen kompatibel zu machen. Solche gängigen Prüfroutinen prüfen insbesondere die Stromstärke durch Leuchtenstromkreise der Anhängerbeleuchtungsanlage, insbesondere die Blinkleuchtenstromkreise und teilweise auch den Bremsleuchtenstromkreis. Teilweise werden solche Überprüfungen nur beim Anschluss einer Anhänger-Beleuchtungsanlage oder beim Starten des Zugfahrzeugs durchgeführt. Bei den Blinkleuchtenstromkreisen erfolgt eine Überprüfung bei jedem Einschalttakt.

Der geringe Betriebsstrom von mit Leuchtdioden bestückten Leuchten wird von den Prüfeinrichtungen im Zugfahrzeug nicht als ausreichend erkannt, so dass bei intakter Leuchtdioden-Anhängerbeleuchtung ein gesondertes Betätigungssignal an die Prüfeinrichtungen des Zugfahrzeugs erforderlich wäre und diese zum Empfang und zur Auswertung eines solchen Bestätigungssignals eingerichtet sein müssten. Durch die Belastung der jeweiligen anhängerseitigen Leuchtenstromkreise mit einem Zusatzstrom wird ein Leuchtenstromkreis mit intakten Glühlampen simuliert und von den zugfahrzeugseitigen Prüfeinrichtungen als intakter Leuchtenstromkreis akzeptiert.

Die Maßnahme der Belastung eines anhängerseitigen Leuchtenstromkreises mit einem Zusatzstrom für ein vorgegebenes begrenztes Zeitintervall macht sich die Eigenschaft gebräuchlicher Prüfeinrichtungen zunutze, den Strom durch einen Leuchtenstromkreis gleichfalls nur für ein zeitlich begrenztes Prüfintervall zu überprüfen.

Vorteilhafterweise wird der Leuchtenstromkreis bei jedem neuen Einschalten des Leuchtenstromkreises im Zugfahrzeug mit dem Zusatzstrom belastet, bei Blinkleuchten also bei jedem Blinktakt, bei Bremsleuchten mit jeder erneuten Betätigung der Bremse.

Das begrenzte Zeitintervall für die Belastung des Leuchtenstromkreises mit dem Zusatzstrom kann für die Blinkleuchtenstromkreise vorteilhafterweise zwischen 50 ms und 250 ms liegen. Das begrenzte Zeitintervall kann für verschiedene Leuchtenstromkreise unterschiedlich vorgegeben sein. Insbesondere kann für den Bremsleuchtenstromkreis ein längeres Zeitintervall vorgegeben sein, so dass bei zugfahrzeugseitigen Prüfeinrichtungen mit kontinuierlicher Prüfung des Bremsleuchtenstroms und Anzeige eines scheinbaren Fehlers dem Fahrer durch die Funktionsanzeige während des begrenzten Zeitintervalls signalisiert wird, dass der Bremsleuchtenstromkreis intakt ist. In anderer Ausführung kann für den Bremsleuchtenstromkreis auch vorgesehen sein, die Belastung des Bremsleuchtenstromkreises mit dem Zusatzstrom periodisch zu wiederholen, so dass eine gegebenenfalls fortwährende Überprüfung mit Anzeige bei längerer Bremsbetätigung durch regelmäßiges Wiederkehren der Funktionsanzeige zwischen einer Fehleranzeige als besonderes Signal der Leuchtdioden-Anhängerbeleuchtung für den Fahrer augenfällig ist.

Die Erfindung ist nachfolgend anhand bevorzugter Ausführungsbeispiele unter Bezugnahme auf die Abbildungen noch eingehend veranschaulicht. Dabei zeigt:
- Fig. 1: ein Beispiel eines Leuchtdioden-Arrays,
- Fig. 2: eine erste Ausführung der Verläufe von Diodenstrom und Leuchtstärke,
- Fig. 3: eine weitere Ausführung der Verläufe von Diodenstrom und Lichtstärke,
- Fig. 4: einen Strompfad mit Überstromsicherung,
- Fig. 5: eine Anordnung mit Strompfaden in Reihenschaltung,
- Fig. 6: eine Anordnung mit Funktionsüberprüfung,
- Fig. 7: Zeitverläufe von Signalen in einem Leuchtenstromkreis.

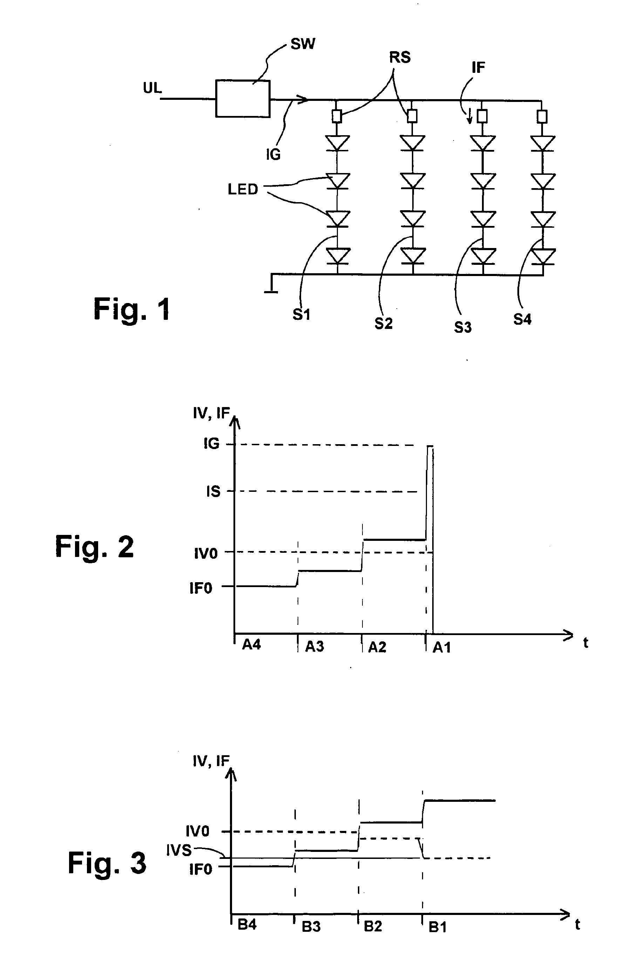

In Fig. 1 ist beispielhaft eine Anordnung einer Mehrzahl von Leuchtdioden LED skizziert, welche in mehreren Strompfaden S1, S2, S3, S4 jeweils in Reihenschaltung mehrerer Dioden und eines Symmetriewiderstands RS angeordnet sind. Bei Verwendung selektierter Dioden können die Symmetriewiderstände RS auch entfallen. Die mehreren parallelen Strompfade S1 bis S4 sind vorteilhafterweise wie skizziert untereinander gleich aufgebaut. Bei Einschalten eines Leuchtenstromkreises, beispielsweise über einen zugfahrzeugseitigen Schalter, wird an den Eingang einer Stromsteuereinrichtung SW eine Spannung UL angelegt. Die Stromsteuereinrichtung SW ist beispielsweise als Schaltwandler mit konstantem Ausgangsstrom IG ausgeführt. Durch den gleichartigen Aufbau aller Strompfade verteilt sich der Ausgangsstrom IG im wesentlichen gleichmä-ßig auf alle vier Strompfade und alle Leuchtdioden LED sind im wesentlichen von demselben Strom durchflossen und geben im Idealfall gleiche individuelle Lichtstärkebeiträge ab, welche sich zu einer Gesamtlichtstärke der betroffenen Leuchte addieren.

In Fig. 2 und Fig. 3 sind Zeitverläufe von Durchlassstrom IF durch die individuellen Leuchtdioden LED und von kumulierter Lichtstärke IV aller stromdurchflossenen Leuchtdioden über einer Zeitachse aufgezeichnet, welche in Intervallen A4, A3, A2, A1 das sukzessive Ausfallen von einzelnen Strompfaden darstellt, wobei die Zahlen in den Intervallen die Anzahl funktionsfähiger Strompfade angeben. Die Intervalle sind keine festen Zeitabschnitte, sondern Funktionszustandsabschnitte und die Zeitachse gibt nur die Reihenfolge der nacheinander auftretenden Intervalle an. Der Durchlassstrom durch die einzelnen Leuchtdioden IF, welcher für alle stromdurchflossenen Leuchtdioden als gleich groß angenommen ist, ist mit durchgezogener Linie, die kumulierte Lichtstärke mit unterbrochener Linie eingetragen. Der bei voll funktionsfähiger Leuchte durch eine einzelne Leuchtdiode fließende Strom ist mit IF0, die anfängliche kumulierte Lichtstärke aller Dioden mit IV0 bezeichnet. Der Maßstab der Ordinate für Diodenstrom und Lichtstärke ist willkürlich und dient nur zur Veranschaulichung qualitativer Verhältnisse.

In einer ersten Ausführungsform, für welche die Fig. 2 die Verläufe von Diodenstrom IF und Lichtstärke IV veranschaulicht, sei angenommen, dass der Ausgangsstrom IG der Stromsteuereinrichtung SW konstant sei, solange wenigstens einer der Strompfade intakt ist. Bei Ausfall eines ersten Strompfades entsprechend dem Übergang von Intervall A4 zu Intervall A3 verteilt sich der Ausgangsstrom IG nur noch auf drei Strompfade anstelle von zuvor vier Strompfaden. Der Diodenstrom durch die individuellen Dioden steigt damit um ein Drittel gegenüber IF0 an. Der Einfachheit halber sei davon ausgegangen, dass die Lichtstärke direkt proportional zu dem Diodenstrom sei. Wie leicht ersichtlich ist, bleibt unter dieser Annahme die kumulierte Lichtstärke beim Übergang vom Intervall A4 zum Intervall A3, d. h. beim Ausfall eines der vier parallelen Strompfade, konstant. In entsprechender Weise wird bei Ausfall eines weiteren Strompfades dessen Stromanteil auf die beiden verbleibenden intakten Strompfade verteilt, so dass nunmehr der individuelle Diodenstrom das Doppelte des anfänglichen Diodenstroms IF0 beträgt und unter der Annahme der zum Diodenstrom parallelen individuellen Lichtstärke die kumulierte Lichtstärke unverändert konstant ist. Es sei ferner angenommen, dass auch bei nur zwei intakten Strompfaden der ursprünglich vier parallelen Strompfade der verdoppelte individuelle Diodenstrom 2xlFO noch unterhalb der absoluten Belastungsgrenze des Durchlassstroms der Dioden liege, sei es durch Wahl eines niedrigen anfänglichen Diodenstroms IF0 oder durch intermittierenden Leuchtenbetrieb, wie beispielsweise bei Blinkleuchten. Der anfängliche Diodenstrom IF0 kann in vorteilhaftem Beispiel bei wenigstens 40 %, insbesondere wenigstens 50 %, vorzugsweise wenigstens 60 % und höchstens 90 %, insbesondere höchstens 80 % des Grenzwerts für den Dauerdurchlassstrom liegen.

Fällt schließlich von den beiden verbliebenen intakten Stromkreisen gemäss Intervall A2 erneut ein Strompfad aus, fließt der Ausgangsstrom IG der Stromsteuereinrichtung SW vollständig durch nur einen Strompfad, so dass der individuelle Diodenstrom in diesem Strompfad sprunghaft auf den Gesamtstrom IG und damit den vierfachen Wert des anfänglichen Diodenstroms ansteigt, wobei der anfängliche Diodenstrom IF0 so auf die Belastbarkeit der Dioden abgestimmt sei, dass bei diesem letzten sprunghaften Stromanstieg in kurzer Zeit eine Abschaltung dieses bis dahin noch fehlerfreien letzten Strompfads erfolgt (Intervall A4) und damit die Leuchte vollständig ausfällt. Dadurch kann vermieden werden, dass dieser letzte Strompfad weiter betrieben ist, obwohl davon auszugehen wäre, dass die Proportionalität von Strom und Lichtstärke hier nicht mehr gilt. Der Fahrer hat bei regelmäßiger Kontrolle der Beleuchtungsanordnung aber die Möglichkeit, bei geringer Entfernung von der Leuchte zumindest das Intervall A2 rechtzeitig zu erkennen, um die Leuchte bald auszutauschen.

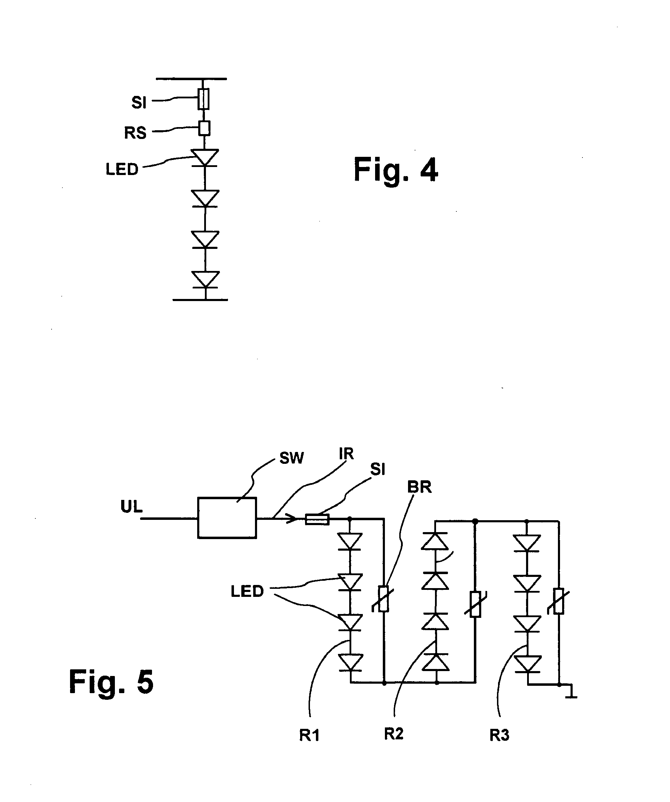

Die Abschaltung des letzten Strompfads bei dem sprunghaften Anstieg des Stroms erfolgt in einer ersten vorteilhaften Ausführung ohne weitere Bauelemente dadurch, dass wenigstens eine der Leuchtdioden in dem Strompfad Leuchtdioden so dimensioniert sind, dass der zulässige Grenzwert für den Betriebsstrom wesentlich unterhalb des Stroms nach dem sprunghaften Anstieg liegt und die Diode in kurzer Zeit zerstört wird. Der Grenzwert kann z. B. bei dem eingetragenen Stromwert IS liegen. In bevorzugter Ausführung ist in jeden Strompfad wie in Fig. 4 für einen Strompfad skizziert eine Überstromsicherung SI als weiteres Bauteil eingefügt, deren Ansprechschwelle bei IS liegt, und welche bei dem sprunghaften Anstieg den Strompfad unterbricht, mit IS<IG.

In anderer vorteilhafter Ausführung, zu welcher die Fig. 3 die Verläufe von Diodenstrom IF und Lichtstärke IV veranschaulicht, kann vorgesehen sein, dass der Ausgangsstrom IG der Stromsteuereinrichtung SW von der Anzahl der intakten Strompfade abhängt. Eine Aussage über die Anzahl intakter Strompfade lässt sich zumindest annähernd aus dem Spannungsabfall entlang der Strompfade ableiten, da bei Abnahme der Anzahl intakter Strompfade die Stromstärke durch die einzelnen Strompfade und somit auch der Spannungsabfall über den Strompfaden steigt und ausgewertet werden kann.

Die Grundmaßnahme, dass bei Ausfall eines der mehreren parallelen Strompfade der Strom durch wenigstens einen der verbleibenden intakten parallelen Strompfade erhöht wird, sei auch in dieser Ausführung übernommen. Weiter sei übernommen, dass die intakten parallelen Strompfade gleich ausgeführt und mit gleichen Stromanteilen des Ausgangsstroms der Stromsteuereinrichtung beaufschlagt werden. Die Intervalle seien zur Unterscheidung von der Ausführung nach Fig. 2 in dieser Ausführung im Diagramm nach Fig. 3 mit B4, B3, B2 und B1 bezeichnet.

Bei Ausfall eines ersten der vier parallelen Strompfade entsprechend einem Übergang vom Intervall B4 zum Intervall B3 sei der Ausgangsstrom IG der Stromsteuereinrichtung SW als noch unverändert angenommen, so dass wie im vorangegangenen Beispiel der Fig. 2 der individuelle Diodenstrom um ein Drittel ansteige und die kumulierte Lichtstärke konstant bleibe, wie im Intervall B3 angenommen. Bei Ausfall eines weiteren Strompfades sei in diesem Ausführungsbeispiel nach Intervall B2 vorgesehen, dass der Ausgangsstrom IG der Stromsteuereinrichtung SW abnimmt und der individuelle Durchlassstrom der einzelnen Leuchtdioden in geringerem Maße ansteigt als im Beispiel nach Fig. 2. Gleichzeitig sei bei direkter Poroportionalität von Durchlassstrom und individueller Lichtstärke der Leuchtdioden angenommen, dass hierdurch die kumulierte Lichtstärke der Diodenanordnung sinkt. Fällt von den im Intervall B2 intakten beiden Strompfaden erneut ein Strompfad aus, sei in diesem Ausführungsbeispiel angenommen, dass der dann durch nur einen Strompfad fließende Ausgangsstrom IG der Stromsteueranordnung weiter abnimmt und auf einen Stromwert begrenzt bleibt, welcher unterhalb der absoluten Belastungsgrenze der verwendeten Leuchtdioden bleibt. Zugleich sei angenommen, dass die dadurch weiter absinkende kumulierte Lichtstärke IVS zwar unterhalb der anfänglichen Lichtstärke IV0, aber noch über einer durch gesetzliche Vorschriften vorgegebenen Mindestlichtstärke oder innerhalb eines Toleranzintervalls unter dieser liege. Hierbei ist durch Verbleiben von nur einem Viertel der ursprünglichen Leuchtdioden und der verringerten kumulierten Lichtstärke für den Fahrer bei Kontrollen der Beleuchtungsanlage besonders augenfällig, dass die betroffene Leuchte alsbald auszutauschen ist. Gleichzeitig kann der Fahrer davon ausgehen, dass er bis zum Austausch der Leuchte die Fahrt noch unbeanstandet fortsetzen kann.

In zu Fig. 1 alternativer Ausführung können mehrere Strompfade R1, R2, R3 in der in Fig. 5 skizzierten Art in Reihe geschaltet und von einem einheitlichen Strom IR durchflossen sein. Vorzugsweise stellt die Steuereinrichtung SW in einer solchen Anordnung eine konstante Spannung bereit. Die in Reihe geschalteten Strompfade R1, R2, R3 enthalten vorzugsweise jeweils mehrere Leuchtdioden. Jedem der Strompfade ist ein NTC-Widerstand BR oder ein Bauteil ähnlicher Charakteristik parallel geschaltet, welches einen durch Defekt einer Leuchtdiode ausgefallenen Strompfad überbrückt und so einen Stromfluss durch die intakten Strompfade ermöglicht. Durch Dimensionierung des Widerstands der NTC-Widerstände im heißleitenden Zustand können wieder Stromverläufe ähnlich Fig. 2 oder Fig. 3 gezielt eingestellt werden. Eine Überstromsicherung SI kann wieder zur gezielten Abschaltung vorgesehen sein.

Im Realfall ist die angenommene direkte Proportionalität von Diodenstrom und individueller Lichtstärke einer einzelnen Diode nicht streng gegeben. Durch Verknüpfung des Ausgangsstroms der Stromsteuereinrichtung SW mit der Anzahl intakter Strompfade, beispielsweise durch Auswertung des Spannungsabfalls an den parallelen Strompfaden, kann aber auf relativ einfache Weise ein gewünschter Verlauf, wie qualitativ in Fig. 2 und Fig. 3 für verschiedene Ausführungen skizziert oder für Kombinationen hiervon eingestellt werden.

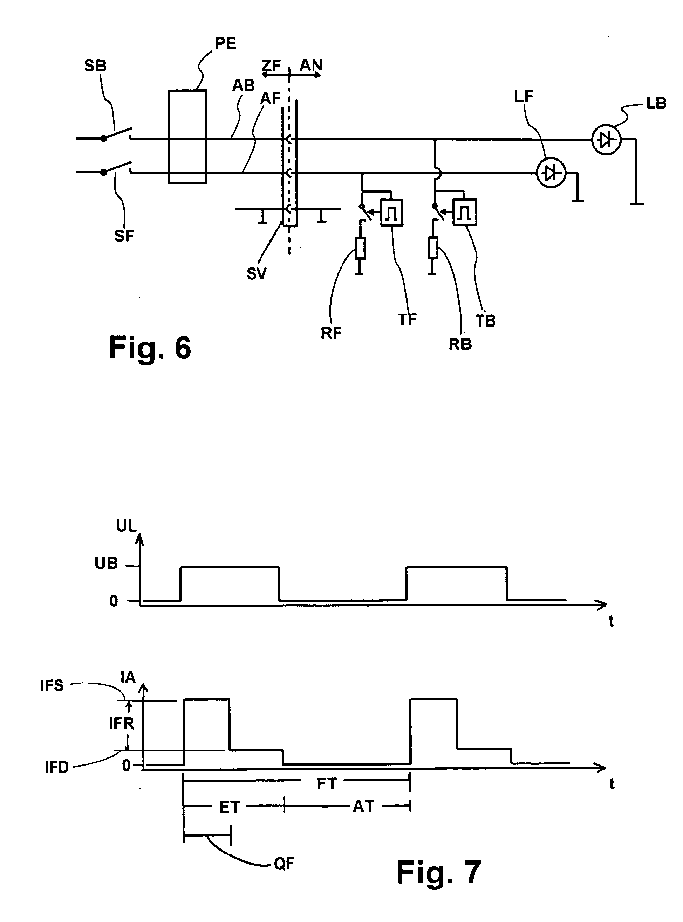

In Fig. 6 ist ein Beispiel für die vorteilhafte Benutzung einer mit Leuchtdioden als Lichtquellen ausgestatteten Anhänger-Beleuchtungsanordnung an einem Zugfahrzeug mit Prüfeinrichtungen für die einzelnen Stromkreise schematisch skizziert. Mit unterbrochener vertikaler Linie sei die Trennung zwischen Zugfahrzeugseite ZF und Anhängerseite AN der verknüpften Beleuchtungsanlage repräsentiert. Auf Zugfahrzeugseite ZF seien beispielhaft ein Stromkreis für eine der anhängerseitigen Blinkleuchten LF mit einer Kabelader AF in einem mehradrigen Verbindungskabel und ein Stromkreis der anhängerseitigen Bremsleuchten LB mit einer Kabelader AB des mehradrigen Kabels dargestellt. Eine Verbindung der zugfahrzeugseitigen elektrischen Einrichtungen mit den anhängerseitigen elektrischen Einrichtungen erfolge über eine gebräuchliche mehrpolige Steckverbindung SV.

Auf Zugfahrzeugseite ZF sei ein Bremsschalter SB vorgesehen, welcher bei Betätigung der Bremse die Kabelader AB mit elektrischer Leistung zum Betrieb herkömmlicher Bremsleuchten beaufschlagt. In entsprechender Weise sei ein Blinkschalter SF, beispielsweise als Teil eines Blinkgebers, vorgesehen, welcher die Kabelader AF beim Einschalten des Blinkers periodisch im Takt von ca. 1,5 Hz mit elektrischer Leistung zum Betrieb herkömmlicher Blinkleuchten auf Anhängerseite beaufschlagt. In den Leitungsverlauf zwischen Schaltern SB bzw. SF und Kabeladern des Verbindungskabels zum Anhänger sei eine Prüfeinrichtung PE eingefügt, welche die auf den Leitungen fließenden Ströme oder mit diesen Strömen korrelierte Größen einzeln überwacht. Prüfeinrichtungen PE sind in Zugfahrzeugen gebräuchlich, so dass auf Einzelheiten hierzu an dieser Stelle nicht eingegangen ist und auf die gebräuchlichen Einrichtungen verwiesen wird. Die Prüfeinrichtung kann auch an anderer Stelle der elektrischen Anlage auf Zugfahrzeugseite angeordnet sein, wo eine Detektion des Stroms durch die einzelnen Adern des Verbindungskabels bzw. die Pole der Steckverbindung zu den einzelnen Leuchtenfunktionen erfassbar ist.

Die Leuchten LF und LB seien beispielsweise nach Art der Fig. 1 als eine Gruppe von Leuchtdioden aufgebaut, deren Stromverbrauch gering ist gegenüber herkömmlichen Glühlampen gleicher Lichtstärke wie die kumulierte Lichtstärke des Dioden-Arrays.

Auf Anhängerseite ist eine Zusatzeinrichtung ZE vorgesehen, mittels welcher die Leuchtenstromkreise durch LF bzw. LB jeweils einzeln mit einem Zusatzstrom belastet werden können, durch welchen ein Gesamtstrom durch die Adern AF bzw. AB des Verbindungskabels erzeugt wird, welcher für eine Funktionserkennung der Leuchtenstromkreise in der Prüfeinrichtung PE ausreichend ist.

Eine Belastung des jeweiligen Leuchtenstromkreises mit dem zugeordneten Zusatzstrom erfolgt nur für ein begrenztes Zeitintervall vorgegebener Dauer, gemessen vom Auftreten einer Betriebsspannung für die Leuchten auf der jeweils zugeordneten anhängerseitigen Leitung des Leuchtenstromkreises. Die Realisierung kann unter Verwendung analoger und/oder digitaler Schaltungstechnik auf vielerlei Arten erfolgen. Im Beispiel ist skizziert, dass für die Belastung der Stromkreise mit dem Zusatzstrom Lastwiderstände RF bzw. RB über Intervallschaltungen TF bzw. TB elektrisch parallel zu den Leuchten LF bzw. LB geschaltet werden können. Für die Zuschaltung der Lastwiderstände kann ein durch eine Betriebsspannung auf der Leitung des Leuchtenstromkreises triggerbare Zeitschaltung in den Intervallschaltungen nach Art eines monostabilen Umschalters vorgesehen sein, welche den Schalter BF bzw. BB für ein vorgegebenes Zeitintervall schließt und danach selbsttätig wieder öffnet.

In Fig. 7 sind für das Beispiel eines Blinkleuchten-Stromkreises Spannung UL und Strom IA auf der Kabelader AF über der Zeit t aufgetragen. Über den Blinkgeber des Zugfahrzeugs wird die Kabelader AF periodisch mit der Versorgungsspannung des Zugfahrzeugs als Betriebsspannung UB für die Blinkleuchte beaufschlagt, wobei die Periodendauer FT ca. 0,5 - 1 Sekunde beträgt und die Einschaltzeit ET und Ausschaltzeit AT innerhalb der Periode FT ungefähr gleich lang sind.

Der Strom durch die mit Leuchtdioden als lichtimittierende Elemente ausgestatteten Blinkleuchte LF sei mit einem Wert IFD so klein, dass er in der Prüfeinrichtung PE nicht für eine Erkennung der korrekten Funktion der Blinkleuchte ausreicht. Durch Zuschaltung des Lastwiderstands RF während eines Zeitintervalls QF beginnend mit jeder neuen Flanke der Betriebsspannung auf der Leitung AF wird der Stromkreis der Blinkleuchte mit einem Zusatzstrom IFR belastet, so dass ein Summenstrom IFS über die Kabelader AF bzw. die zugeordnete Leitung im Zugfahrzeug fließt, welcher durch entsprechende Bemessung des Lastwiderstands RF so groß ist, dass die Prüfeinrichtung daraus die korrekte Funktion der Blinkleuchte ableitet.

In entsprechender Weise kann im Bremsleuchtenstromkreis vorgesehen sein, dass mit jeder erneuten Betätigung des Bremsschalters SB für ein Zeitintervall vorgegebener Länge, welche von dem Zeitintervall QF verschieden sein kann, der Leuchtenstromkreis der Bremsleuchte mit einem Zusatzstrom durch den Lastwiderstand RB belastet wird, welcher so bemessen ist, dass die Prüfeinrichtung PE daraus eine korrekte Funktion der Bremsleuchte LB ableitet.

Die Zusatzeinrichtung ZE kann vorteilhafterweise eigene Prüfeinrichtungen oder vergleichbare Steuermittel enthalten, welche eine Belastung des jeweiligen Leuchtenstromkreis mit dem Zusatzstrom über den Lastwiderstand nur dann veranlassen oder zulassen, wenn die an den Leuchtenstromkreis angeschlossene Leuchte tatsächlich funktioniert. Bei defekter Leuchte LF bzw. LB wird dann der Stromkreis nicht mit einem Zusatzstrom belastet und die Prüfeinrichtung PE im Zugfahrzeug erkennt zutreffenderweise einen Defekt in der Anhängerbeleuchtungsanlage.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Fahrzeugleuchtenanordnung, insbesondere für Nutzfahrzeuge, für wenigstens eine Leuchtenfunktion mit einer Mehrzahl von Leuchtdioden als Lichtquellen in einer Leuchte, welche in mehreren Strompfaden angeordnet sind, **dadurch gekennzeichnet, dass** die mehreren Strompfade über eine Steuereinrichtung (SW) mit vorgebbaren Betriebsströmen (IG, IR) beaufschlagbar sind und die Strompfade (S1 bis S4, R1 bis R3) und die Leuchtdioden (LED) in der Art verschaltet sind, dass bei Ausfall eines einzelnen Strompfads die Leuchtdioden in den anderen Strompfaden weiter mit Betriebsströmen beaufschlagbar sind.

2. Anordnung nach Anspruch 1, **dadurch gekennzeichnet, dass** auch nach Ausfall eines Teils der mehreren Strompfade die Leuchte mit den Leuchtdioden in den verbleibenden Strompfaden noch eine die Mindesterfordernisse einer Zulassungsvorschrift erfüllende Lichtstärke aufweist.

3. Anordnung nach Anspruch 1 oder 2, **dadurch gekennzeichnet, dass** die Leuchtdioden (LED) in mehreren parallelen Strompfaden (S1 bis S4) jeweils zu mehreren in Serie angeordnet sind und dass die Steuereinrichtung (SW) bei Ausfall eines der mehreren parallelen Strompfade den Strom durch wenigstens einen verbleibenden Strompfad erhöht.

4. Anordnung nach Anspruch 3, **dadurch gekennzeichnet, dass** die Steuereinrichtung den vor Ausfall eines Strompfads durch diesen geleiteten Strom gleichmäßig auf die verbleibenden parallelen Strompfade verteilt.

5. Anordnung nach Anspruch 3 oder 4, **dadurch gekennzeichnet, dass** bei Funktion aller parallelen Strompfade der von der Steuereinrichtung vorgegebene Betriebsstrom durch die einzelnen Strompfade wenigstens 40 %, insbesondere wenigstens 50 %, vorzugsweise wenigstens 60 % und höchstens 90 %, insbesondere höchstens 80 % des Grenzwerts des Dauer-Durchlassstroms der Dioden beträgt.

6. Anordnung nach einem der Ansprüche 3 bis 5, **dadurch gekennzeichnet, dass** die Steuereinrichtung einen Summenstrom für alle Strompfade vorgibt und auf eine gemeinsame Zuleitung zu allen Strompfaden leitet.

7. Anordnung nach einem der Ansprüche 3 bis 6, **dadurch gekennzeichnet, dass** wenigstens drei und höchstens acht, insbesondere höchstens sechs, vorzugsweise genau vier parallele Strompfade vorhanden sind.

8. Anordnung nach einem der Ansprüche 3 bis 7, **dadurch gekennzeichnet, dass** die Steuereinrichtung bei Funktion aller der mehreren parallelen Strompfade eine über alle Leuchtdioden kumulierte anfängliche Lichtstärke (IV0) bewirkt und dass jeder der mehreren parallelen Strompfade im Falle des Ausfalls aller anderen Strompfade zur Erzeugung einer maximalen Lichtstärke von wenigstens 60 %, insbesondere wenigstens 75 % der kumulierten Normal-Lichtstärke ausgelegt ist und die Steuereinrichtung den einzigen funktionierend verbleibenden Strompfad mit einem entsprechend erhöhten Strom beaufschlagt.

9. Anordnung nach einem der Ansprüche 3 bis 8, **dadurch gekennzeichnet, dass** in den parallelen Strompfaden jeweils wenigstens ein Symmetrierwiderstand in Serie zu den Leuchtdioden angeordnet ist.

10. Anordnung nach Anspruch 1 oder 2, **dadurch gekennzeichnet, dass** mehrere Strompfade (R1, R2, R3) in Reihe geschaltet sind und zumindest ein Teil der Anzahl der Strompfade durch eine bei Unterbrechung des Strompfads automatisch in Funktion tretenden Überbrückungspfad (BR) überbrückt wird.

11. Anordnung nach Anspruch 10, **dadurch gekennzeichnet, dass** der Widerstand des Überbrückungspfads nach dessen Zuschaltung geringer ist als der Widerstand des überbrückten Strompfads vor dessen Ausfall.

12. Anordnung nach einem der Ansprüche 1 bis 11, **dadurch gekennzeichnet, dass** eine Sicherheitsvorrichtung vorgesehen ist, welche bei unter eine vorgegebene Mindestanzahl abfallender Anzahl funktionierender Strompfade den oder die Betriebsströme durch die verbliebenen funktionierenden Pfade unterbricht.

13. Anordnung nach Anspruch 12, **dadurch gekennzeichnet, dass** die Sicherheitsvorrichtung eine Überwachungseinrichtung enthält, welche die Anzahl der funktionierenden Strompfade überwacht und bei Unterschreiten der Mindestanzahl eine Schalteinrichtung zur Unterbrechung des oder der Betriebsströme betätigt.

14. Anordnung nach Anspruch 12, **dadurch gekennzeichnet, dass** die Sicherheitsvorrichtung wenigstens eine Überstromsicherung (SI) in dem oder den Strompfaden enthält.

15. Anordnung nach Anspruch 14, **dadurch gekennzeichnet, dass** die Überstromsicherung durch wenigstens eine der Leuchtdioden gebildet ist.

16. Anordnung nach einem der Ansprüche 1 bis 15, **dadurch gekennzeichnet, dass** wenigstens zwei Leuchtdiodentypen mit unterschiedlichen Abstrahlcharakteristiken der Raumwinkelverteilung der Lichtstärke vorhanden sind.

17. Anordnung nach Anspruch 16, **dadurch gekennzeichnet, dass** in einem Strompfad jeweils Leuchtdioden einheitlichen Leuchtdiodentyps angeordnet sind.

18. Anordnung nach Anspruch 16, **dadurch gekennzeichnet, dass** in mehreren oder allen Strompfaden jeweils Leuchtdioden unterschiedlicher Leuchtdiodentypen vorhanden sind.

19. Fahrzeugleuchtenanordnung, insbesondere für Nutzfahrzeuganhänger, mit wenigstens einer Leuchte im Stromkreis einer Leuchtenfunktion und mit einer Prüfeinrichtung, welche durch Vergleich des Stroms durch den Stromkreis mit einem Referenzwert oder einer damit korrelierten Messgröße einen Funktionstest der Leuchte durchführt, **dadurch gekennzeichnet, dass** die Leuchte Leuchtdioden als Leuchtmittel enthält, dass der Betriebsstrom der Leuchte unter dem für eine Funktionserkennung durch die Prüfeinrichtung erforderlichen Referenzwert liegt, und dass eine Zusatzeinrichtung das Einschalten der Leuchte detektiert und für ein vorgegebenes begrenzte Zeitintervall nach dem Einschalten den Stromkreis mit einem Zusatzstrom belastet.

20. Anordnung nach Anspruch 19, **dadurch gekennzeichnet, dass** die Leuchte eine Blinkleuchte ist und die begrenzte Zeitdauer weniger als 250 ms, vorzugsweise weniger als 150 ms beträgt.

21. Anordnung nach Anspruch 19, **dadurch gekennzeichnet, dass** die Leuchte eine Blinkleuchte ist und die begrenzte Zeitdauer weniger als 60 %, insbesondere weniger als 50 % der periodischen Einschaltdauer der Leuchte im Blinkbetrieb beträgt.

22. Anordnung nach Anspruch 19, **dadurch gekennzeichnet, dass** die Leuchte eine Bremsleuchte ist und die begrenzte Zeitdauer wenigstens 0,5 s, insbesondere wenigstens 1 s, vorzugsweise wenigstens 1,5 s und höchstens 5 s beträgt.

23. Anordnung nach einem der Ansprüche 19 bis 22, **dadurch gekennzeichnet, dass** die Zusatzeinrichtung von der Leuchte beabstandet angeordnet ist.

24. Anordnung nach Anspruch 23, **dadurch gekennzeichnet, dass** eine für mehrere Leuchtenstromkreise gemeinsame Zusatzeinrichtung mit individueller Einschaltdetektion und individueller Zusatzstrombelastung der verschiedenen Leuchtenstromkreise vorhanden ist.

25. Anordnung nach einem der Ansprüche 19 bis 24, **dadurch gekennzeichnet, dass** die Zusatzeinrichtung ihrerseits eine Funktionsüberprüfung der Leuchte durchgeführt und den Stromkreis nur bei funktionierender Leuchte mit dem Zusatzstrom belastet.

26. Anordnung nach Anspruch 25, **dadurch gekennzeichnet, dass** die Zusatzeinrichtung eine Funktionsprüfung der Leuchte nur bei jedem erneuten Anschluss der Leuchtenanordnung an das Bordnetz des Fahrzeugs durchführt.
